# EUROPÄISCHE PATENTSCHRIFT

(11) **EP 0 477 716 B1**
(45) Veröffentlichungstag und Bekanntmachung des Hinweises auf die Patenterteilung: **19.03.1997**
(21) Anmeldenummer: 91115687.5
(22) Anmeldetag: 16.09.1991
(51) Int. Cl.: A01D 90/00, A01D 90/12

(54) **Selbstladewagen**
Self-loading-vehicle
Véhicule autochargeuse

(30) Priorität: 24.09.1990 DE 9013422 U; 03.07.1991 DE 4122024
(43) Veröffentlichungstag der Anmeldung: 01.04.1992
(73) Patentinhaber: Alois Pöttinger Maschinenfabrik GmbH, A-4710 Grieskirchen (AT)
(72) Erfinder: Edlbauer, Karl, Ing., A-4710 Grieskirchen (AT)
(74) Vertreter: Dupal, Helmut

(56) Entgegenhaltungen:
- DE-A- 1 952 519
- DE-A- 2 338 106
- DE-A- 3 821 694
- DE-U- 1 908 819
- DE-U- 9 013 422

## Beschreibung

Die Erfindung bezieht sich auf einen Selbstladewagen gemäß dem Oberbegriff des Anspruchs 1.

Bei Ladewagen dieser Art wird das in den Laderaum beförderte Erntegut an der Vorderwand hochgeschoben, bis es nach hinten fallend einen flachen Haufen bildet.

Mit dem Kratzboden kann dieser Ernteguthaufen nach hinten bewegt werden und neuerlich Erntegut eingefüllt werden.

Schließlich ist der Laderaum bei Beladung mit Rauhfutter bei Beendigung des Ladevorganges im Vorderteil bis an die Spannseile der Oberseite des Laderaumes mit gepreßtem Ladegut gefüllt, während vor der Laderaumrückwand ein erheblicher Leerraum verbleibt, der nicht mehr zu füllen ist, wodurch die Pressung im hinteren Laderaum gering bleibt und insgesamt ungenügend ist.

Bei Beladung mit Grünfutter oder Anwelkfutter hingegen muß wegen der sonst auftretenden Überlastung der Fördervorrichtung und des Antriebsstranges die Füllung auf eine geringere Füllhöhe beschränkt bleiben und der Kratzboden bereits früher betätigt werden, damit der gebildete Guthaufen den Förderkanal freigibt. Die Beladung geschieht dann nicht gleichmäßig, weil häufig der Guthaufen zu früh weiterbefördert wird und ebenso verbleibt vor der Laderaumrückwand ein Freiraum, oder das Gut wird zu stark angepreßt, was zu Schwierigkeiten insbesonders beim Öffnen führt, oder das Ladegut wird durch die hohe Pressung beschädigt und gequetscht.

Zur Vermeidung der beschriebenen Nachteile wurde bereits vorgeschlagen die Vorderwand des Laderaumes als Ganzes schwenkbeweglich zu gestalten und deren Schwenkung zum mechanischen Schalten eines mechanischen Kratzbodenantriebes zu verwenden.

Dabei wird aber das Gut sehr schräg nach hinten in den Ladewagen geladen, so daß die Befüllung dort unter zu geringem Druck geschieht, während im vorderen Teil des Laderaumes eine höhere Verdichtung des Ladegutes erzielbar ist.

In der DE-U-1 908 819 wird für einen Ladewagen vorgeschlagen zwischen Kratzboden und Dachseilen des Laderaumes eine Schiebewand für das kompaktere Laden anzubringen. Zum Einschalten des Kratzbodens bei Überschreitung eines vorbestimmten Druckes des Ladegutes ist eine Fördervorrichtung mit einem Bandförderer am Fahrgestellrahmen des Ladewagens mittels eines Vertikalträgers verschwenkbar gelagert vorgesehen, der hinter der Vorderwand des Laderaumes , lotrecht nach oben fördernd, angebracht ist und eine Abdeckung nach hinten zum Laderaum hin besitzt. Der Druck des Ladegutes verschwenkt die Ladevorrichtung und der Vertikalträger schaltet mit einem Ausleger eine Kurbelstange eines Kurbelantriebes des Kratzbodens ein und nach Absenkung des Druckes des geladenen Futters beim Zurückschwenken in die vertikale Grundstellung wieder aus.

Die Rückstellung erfolgt durch die Kraft einer Feder einer teleskopartigen Stütze mit der die Fördervorrichtung nach vorne am Fahrgestellrahmen des Ladewagens federnd abgestützt ist.

Zur Verbesserung der Befüllung wurde auch vorgeschlagen, eine Verdichtungsklappe in der Vorderwand des Laderaumes anzubringen, doch wirkt diese nach hinten und kann keine gleichmäßig verdichtende Ladung bewerkstelligen.

Aus der DE-A-19 52 519 ist eine Umlenkwand zu entnehmen, die unmittelbar oberhalb des Endes des Förderkanals einer Fördervorrichtung um eine quer zum Laderaum angeordnete Schwenkachse angelenkt und nach hinten zu schräg nach oben angestellt und mit den Dachseilen des Laderaumes verbunden ist.

Diese Umlenkwand preßt das Ladegut schräg nach hinten unten und in dem Maße wie sie mit der Beladung des Laderaumes in eine steilere Lage gelangt mehr nach hinten zu und verdichtet damit das Ladegut, während die Schaltung des Kratzbodens von Hand aus vorgesehen ist.

Die Erfindung hat zum Ziel, die Befüllung des Laderaumes mit einfachen Mitteln im Sinne einer höheren und gleichmäßigeren Verdichtung und Beladung zu verbessern.

Bei einem Ladewagen der eingangs beschriebenen Art wird die Aufgabe mit den Merkmalen des kennzeichnenden Teiles des Anspruches 1 gelöst.

Die Unteransprüche, die ebenso wie Anspruch 1 gleichzeitig einen Teil der Beschreibung bilden, betreffen besondere vorteilhafte Ausgestaltungen der Erfindung.

Die Merkmale des kennzeichnenden Teiles des Anspruches 1 ergeben eine Lösung, bei der es bei einem Ladewagen ohne große bewegte Teile an einer Begrenzungswand möglich ist, die Befüllung des Laderaumes durch genaue Abstimmung des Kratzbodenvorschubes, im Sinne des Erfinders des Selbstladewagens, zu erreichen, indem bei bestimmten voreinstellbaren Preßkräften, die auf Grund von Messungen des Herstellers oder des Verwenders mittels Meßgeräten im Antriebsstrang festgestellt werden können und auf die der oder die Druckaufnehmer voreingestellt werden, die Einschaltung des Kratzbodens so vorzunehmen, daß bei Erreichen des voreingestellten Preßdruckes der Kratzboden die verdichtete Gutpartie nach hinten schiebt und wieder abzuschalten, wenn der Preßdruck unter dieses voreingestellte Maß abfällt. Überdies ist es dadurch möglich, diese Eichung bei verschiedenen Ladegütern zu machen, die nicht alle den gleichen Preßdruck vertragen, oder mit denen ein Selbstladewagen wegen der Gefahr einer Beschädigung des Ladegutes nicht gleich hoch gefüllt werden darf.

Es wird der Druckaufnehmer für das Laden von Grün- oder Anwelkgut im unteren Bereich der Vorderwand angebracht. Für leichteres Ladegut, wie Rauhfutter oder Stroh bei dem die Füllung des Laderaumes bis an die dann notwendigen Dachseile vorgenommen wird, ist die Anbringung eines Druckaufnehmers in einem höheren Bereich der Vorderwand oder auf deren Verlängerung vorgesehen.

Es können selbstverständlich auch an mehreren Stellen gleichzeitig Druckaufnehmer angebracht werden, auf die je nach Bedarf umgeschaltet werden kann.

Durch den Aufbau und die Anbringung des Druckaufnehmers an der Vorderwand des Laderaumes kann eine starre Gegenhalterung und Führungsbahn gebildet werden, die den Druck des Erntegutes von der Fördervorrichtung her aufnimmt und eine sehr viel größere Verdichtung als bei den bisherigen Anordnungen erlaubt, während gleichzeitig das Verschieben des gepreßten Ladegutes nach hinten durch die Betätigung des Kratzbodens unbehindert erfolgen kann.

Die Gestaltung des druckübertragenden Teiles soll so gewählt sein, daß der Druck über eine ausreichende Fläche aufgenommen wird, um Druckspitzen, und damit Fehlschaltungen, die in einem eng begrenzten Bereich auftreten können, zu vermeiden.

Die Gestaltung des druckübertragenden Teiles soll auch an die Beschaffenheit des Gutes angepaßt sein, sowohl hinsichtlich der Länge der Halme oder Teile, z.B. bei Stroh oder bei Häckselgut, als auch hinsichtlich ihrer Neigung, an Hindernissen hängenzubleiben und zu verstopfen, wozu wenig oder ungekürztes Halmgut neigt.

Zur Verbesserung der Gleiteigenschaften soll das druckübertragende Teil entsprechend gestaltet sein, dazu dient auch die Anordnung einer gegebenenfalls vorhandenen Schwenkachse, wobei das druckübertragende Teil und der Druckaufnehmer nur funktionell miteinander verbunden sein können, d.h. an jeder Anlenkstelle ist dann ein druckübertragendes Teil des Druckaufnehmers angebracht und verbleibt dort.

Das druckaufnehmende Teil kann mechanisch auf ein Schaltglied einwirken,dessen mögliche Beschaffenheit für Schaltaufgaben bekannt ist und mechanisch, elektrisch, galvanisch oder induktiv oder piezoelektrisch oder hydraulisch auf einen Schalter des Kratzbodengetriebes wirken und bei Übersteigen des eingestellten Druckes den Kratzboden einschalten und nach Abebben des Druckes diesen wieder abschalten. Damit ist jede Kombination zwischen mechanischer, über hydraulischer bis hin zur elektrischen Schalt- und Antriebsweise möglich, je nach dem, was sich als wirtschaftlich für die Verwirklichung der Steueraufgabe anbietet.

Zur Vermeidung von zu häufigem Schalten durch rückkoppelnde Druckschwingungen und deren nachteiligen Folgen kann eine Zeitverzögerung bekannter Art entweder beim Steuerschalter oder beim Schalter des Kratzbodenantriebes angewendet werden.

Als Steuerschalter können elektromechanische Schalter oder piezoelektrische oder induktive oder kapazitive oder auch hydraulische Schalter Verwendung finden, wobei der Schalter zur Schaltung des Kratzbodengetriebes an diesen angepaßt sein muß und ein elektromechanischer, elektrohydraulischer oder hydraulischer Schalter sein kann. Die Auswahl richtet sich dabei nach den jeweiligen Signalübertragungsmöglichkeiten, nach dem verfügbaren Energieträger und nach der Antriebsweise des Kratzbodens des Selbstladewagens.

Besonders einfach wird die Anwendung eines einzigen Druckaufnehmers in mehreren Bereichen der Vorderwand, wenn die Anbringungsstellen zum Befestigen an entsprechenden Lagen an der Vorderwand vorbereitet sind.

Eine besonders einfache Ausführungsform für das druckübertragende Teil besteht im Aufbau aus einer Platte oder einem Gatter, an dem ein Bügel angebracht ist, der aus dem Laderaum durch die Vorderwand herausgeführt ist und den außenliegenden Steuerschalter mechanisch betätigt.

Bei jeder Art von Steuerschalter sind die Schaltwege verhältnismäßig klein und ein Rückführungsmittel in Form einer Feder stellt bei Verminderung des Gutdruckes unter den voreingestellten Wert den Grundzustand des Druckaufnehmers wieder her.

Bei Anwendung einer Preßklappe als Verlängerung der Vorderwand an deren oberen Ende bestimmt sich deren Länge daraus, wie weit nach hinten der Druck von der Fördervorrichtung auf das Ladegut ausgeübt wird, um diesen für die Pressung möglichst gut auszunützen und zu vermeiden, daß dieser Druck das Ladegut zu sehr gegen die Abdeckseile preßt und dann das Verschieben des gepreßten Ladegutes nach hinten erschwert.

Durch die abnehmhare Anbringung gefederter Stützen ist die Preßklappe bei Bedarf zu entfernen oder kann nachgerüstet werden.

Die geteilte, gefederte Ausführung der Stützen ermöglicht die nachgiebige Anbringung der Preßklappe und durch die Einstellung der Federspannung kann der Preßbereich beeinflußt werden.

Überdies ist dadurch die Anwendung eines Steuerschalters möglich, mit dessen Hilfe der Transport des gepreßten Ladegutes nach hinten mittels Kratzboden und dessen Stillsetzen automatisch vorgenommen werden kann, wodurch der gesamte Laderaum mit im wesentlichen gleich stark gepreßtem Ladegut vollständig ausgefüllt wird und damit eine wesentlich bessere Ausnutzung des Laderaumes gestattet.

Durch die Einhaltung eines stumpfen Winkels zwischen der Vorderwand des Laderaumes und der Preßklappe wird die Führung des Ladegutes nach hinten wesentlich erleichtert.

Zusätzlich wirkt sich die Neigung des oberen Teiles der Vorderwand nach hinten gleicherweise günstig aus.

Durch die Anwendung von Profilen und Formrohren wird eine sehr stabile Bauweise erreicht, wobei die nach hinten verlaufenden Profile die Führung des Ladegutes sehr verbessern.

Für die ausreichende Preßwirkung ist die Abstimmung des Gewichtes und die Vorspannung der Druckfedern der Stützen auf den Preßdruck, der von der Fördervorrichtung her ausgeübt wird, wichtig.

Durch das Verbinden der Preßklappe mit den nach hinten führenden Abdeckseilen wird eine Fortsetzung der Führung nach hinten, angepaßt an einen eingestellten Füllungsgrad erreicht.

Die Erfindung wird anschließend an Hand der Zeichnung von Ausführungsbeispielen der Erfindung beschrieben.

Es zeigt:

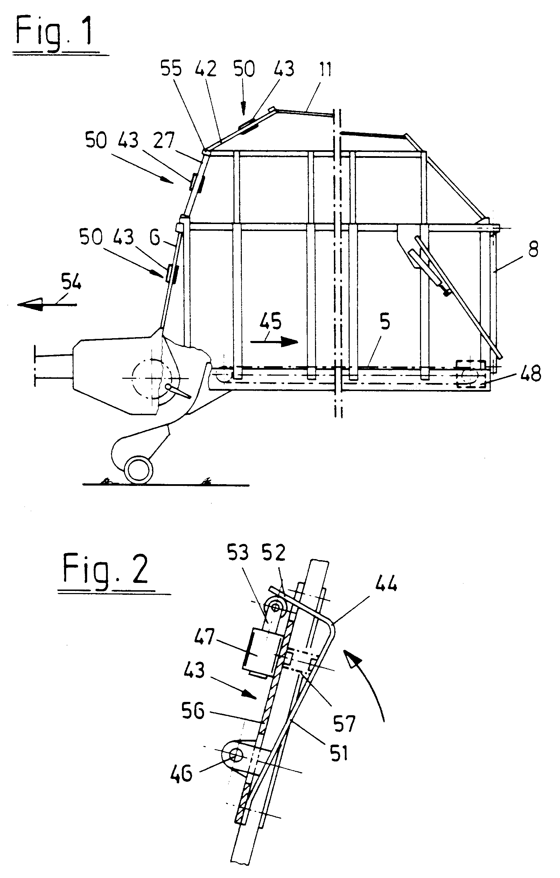

- Fig. 1: eine seitliche Teilansicht eines Selbstladewagens mit angedeuteten Anbringungsstellen von einem oder mehreren Druckaufnehmern, schematisch,
- Fig. 2: einen Teilausschnitt aus der Vorderwand nach Fig.1,

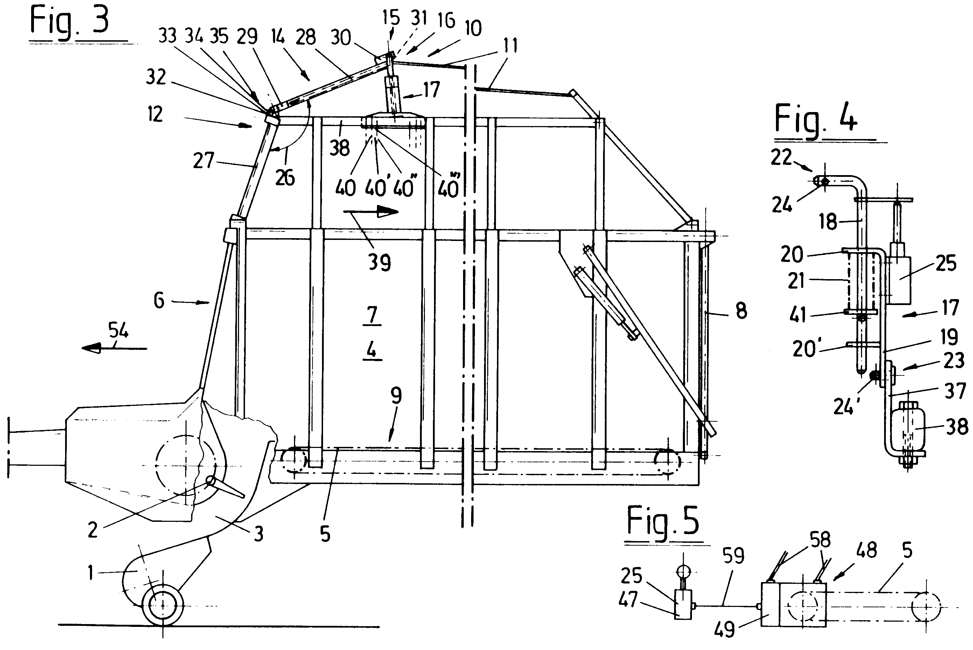

- Fig. 3: eine seitliche Teilansicht eines Selbstladewagens mit der Preßklappe, schematisch,
- Fig. 4: einen Ausschnitt von Fig.1, mit der Stütze der Preßklappe, von vorne gesehen und
- Fig. 5: ein Schema über das Zusammenwirken zwischen Druckaufnehmer an der Vorderwand des Laderaumes und dem Schalter für das Kratzbodengetriebe.

Bei einem Selbstladewagen wird das auf dem Boden liegende Halm-und Blattgut von einer Aufnahmevorrichtung 1 aufgenommen und in einem Förderkanal 3 an eine Fördervorrichtung 2 übergeben, die es durch den Förderkanal 3 nach oben gerichtet entlang der Vorderwand 6 eines Laderaumes 4 in diesen abgibt, der noch von zwei Seitenwänden 7, einem als Kratzboden 5 ausgebildeten Boden 9 und aus einer zu öffnenden Rückwand 8 gebildet wird. An der Oberseite 10 des Laderaumes 4 sind Abdeckseile 11 angebracht, die von der Vorderwand 6 bis zur Rückwand 8 reichen und bei Rauhfutter oder Stroh als Ladegut zum Zurückhalten desselben dienen.

Die Vorderwand 6 ist mit einem oberen Teil 27 versehen, der leicht schräg nach rückwärts geneigt angeordnet ist.

An dem oberen Teil 27 der Vorderwand 6 ist im wiedergegebenen Fall eine Verlängerung 42 mit einer quer zur Fahrtrichtung 54 ausgerichteten Schwenkachse 55 höhenverstellbar angelenkt, die das Ladegut nach hinten umlenkt, wenn es soweit nach oben gefördert wird, was gewöhnlich nur bei Rauhfutter und Stroh der Fall ist.

An der Vorderwand 6 und an deren Verlängerung 42 sind mehrere Anbringungsstellen 50 vorgesehen, an denen Druckaufnehmer 43 befestigt sind. Jeder Druckaufnehmer 43 weist ein druckübertragendes Teil 44 auf, das in den Laderaum 4 reicht und ein Schaltglied 47 einschaltet, wenn ein voreinstellbarer Druck auf das druckübertragende Teil 44 überschritten wird.

Das druckübertragende Teil 44 ist auf einer Montageplatte 56 befestigt und von einer Feder 57 in das Innere des Laderaumes 4 gedrückt gehalten. Dabei ist das druckübertragende Teil 44 an einer senkrecht zur Fahrtrichtung 54 und senkrecht zur Förderrichtung 45 des Ladegutes ausgerichteten Schwenkachse 46 verschwenkbar gelagert, die in Förderrichtung 45 gesehen am Druckaufnehmer 43 vorne liegt, wodurch Hängenbleiben oder Verstopfen vermieden wird.

Die Druckplatte 51 des druckaufnehmenden Teiles 44 ist mit einem Betätigungsbügel 52 versehen, der den Schaltstößel 53 des Schaltgliedes 47 übergreift und diesen bei Drucküberschreitung betätigt.

Das Schaltglied kann aus einem Teil eines mechanischen Betätigungsgestänges, oder was wesentlich einfacher und wirksamer ist aus einem elektromechanischen, piezoelektrischen, induktivmechanischen oder hydraulischen Schalter bestehen, je nach dem ob die Fortleitung des Schaltsignals mechanisch, elektrisch oder hydraulisch erfolgen soll und, je nach dem wie die Übertragungsmittel für die Schaltungsanordnung des Kratzbodenantriebes 48 beschaffen sind und welche Art von Kratzbodenantrieb 48 Verwendung findet.

Das Schaltsignal wirkt über eine Signalleitung 59 auf einen Steuerschalter 49 des Kratzbodenantriebes 48, der mechanisch, elektrisch oder hydraulisch erfolgt, so daß der Steuerschalter 49 wiederum mechanisch, elektromechanisch, elektrohydraulisch oder hydraulisch schalten kann.

Im vorliegenden Fall wurde ein elektromechanisches Schaltglied 47 vorgesehen, das einen elektrohydraulischen Schalter 49 öffnet, durch den das Druckmittel 58 in den Kratzbodenantrieb 48 geleitet wird .

Nach Beendigung der Drucküberschreitung an dem Druckaufnehmer 43 wird das Schaltglied 47 durch Rückstellung des druckübertragenden Teiles 44 mittels der Feder 57 geöffnet und das Schaltsignal unterbrochen, wodurch der Steuerschalter 49 für den Kratzbodenantrieb 48 diesen abschaltet.

Auf diese Weise wird das Ladegut nur soweit nach hinten befördert, wie dies für die Schaffung eines neuen Raumes für die Beladung durch die Fördervorrichtung 2 notwendig ist.

Die Druckaufnehmer 43 sind an Anbringungsstellen 50 angeordnet, von denen eine für sehr schweres Ladegut, das nicht sehr hoch aufgeschichtet werden kann, weil ansonsten das Gut durch zu hohe Pressung von der Fördervorrichtung 2 her gequetscht und in der Qualität beeinträchtigt wird, im unteren Teil der Vorderwand 6 angebracht ist.

Für etwas leichteres Ladegut ist eine Anbringungsstelle 50 an dem oberen Teil 27 der Vorderwand 6 vorgesehen, wenn das Gut höhere Preßkräfte aushält oder von wesentlich leichterer Beschaffenheit ist.

Für das Beladen mit Rauhfutter oder Stroh, d.h. mit sehr leichtem Ladegut, ist ein Druckaufnehmer 43 an der Verlängerung 42 angebracht, die das Gut nach hinten umlenkt.

Nachdem die Beförderung unterschiedlicher Ladegüter kurz hintereinander oder abwechselnd recht selten geschieht, ist es möglich mit einem Druckaufnehmer 43 das Auslangen zu finden und diesen, je nach dem vorgesehenen Ladegut, an einer der drei Anbringungsstellen 50 zu befestigen.

Um den Befüllungsgrad des Laderaumes 4 möglichst hoch zu halten ist es möglich, mittels eines Meßgerätes die Kraft zu messen, die für den Antrieb der Fördervorrichtung 2, bei einer bestimmten Pressung und damit einem Druck, bei dem das Ladegut noch nicht beeinträchtigt wird erforderlich ist, und diesen Druckwert an dem Druckaufnehmer 43 einzustellen.

Bei Anwendung einer Verlängerung 42 für die Vorderwand 6 sind an deren oberen Ende 12 mehrere Laschen 32 in Abständen zueinander angebracht, die mit entsprechenden Laschen 34, die an dem vorderen Querträger 29 einer Preßklappe 14 befestigt sind und mit Schwenkbolzen 33 Scharniergelenke 35 bilden, an denen die Preßklappe 14 auf-und abschwenkbar befestigt ist.

Die Preßklappe 14 besteht aus einem vorderen Querträger 29 und einem hinteren Querträger 30 und aus zwischen diesen über die Breite 13 der Vorderwand 6 angeordneten, von vorne nach hinten ausgerichteten Profilen 28, die beiderseits an den Querträgern 29 und 30 verschweißt sind.

Am hinteren Ende der Preßklappe 14 sind beiderseits außen Stützen 17 angeordnet, mit denen sie mit den Seitenwänden 7 gelenkig verbunden ist.

Jede Stütze 17 besteht aus einem stabförmigen Stützteil 18 und einem Lagerteil 19, in dessen Führungen 20,20' der stabförmige Stützteil 18 verschieblich geführt ist.

Zwischen der oberen Führung 20 und einem Widerlager 41 am stabförmigen Stützteil 18 ist eine Druckfeder 21 eingesetzt.

Der stabförmige Stützteil 18 ist oben umgebogen und als Bolzen-Bohrungsanordnung 22 an der Preßklappe 14 und der Lagerteil 19 mit einer Bolzen-Bohrungsanordnung 23 an einem Trägerteil 37 befestigt und mit Absteckern 24,24' gesichert.

Der Trägerteil 37 ist mit dem oberen Längsträger 38 der Seitenwand 7 in einer von mehreren , in der Längsrichtung 39 des Laderaumes 4 angeordneten Bohrungen 40,40', 40'', 40''' verschraubt.

Durch die Wahl der entsprechenden Bohrungen 40,40'' oder 40,40''' ist die Neigung der Preßklappe 14 nach rückwärts einstellbar, wobei diese dann, wenn sie sich in der Grundstellung, in der sie unter der Wirkung der Druckfeder 21 die tiefste Lage einnimmt, mit der Vorderwand 6 des Laderaumes 4 einen stumpfen Winkel 26 von 120 Winkelgrad aufweist.

Am hinteren Ende 15 der Preßklappe 14 sind über die Breite 13 des hinteren Querträgers 30 Bügel 31 angebracht, in die die Abdeckseile 11 mit ihren vorderen Enden 16 eingehängt sind, während sie mit den hinteren Enden im Bereich der Rückwand 8 des Laderaumes 4 befestigt sind.

Beim Beladen wird das Erntegut vom Förderkanal 3 an der Vorderwand 6 entlang nach oben geschoben, bis es auf die Preßklappe 14 trifft und gegen diese drückend zusammengepreßt wird, bis die Bewegung der Preßklappe 14 über eine voreingestellte Stellung nach oben, den Steuerschalter 25 betätigt, der einen Schaltkreis aktiviert, über den der Antrieb des Kratzbodens 5 eingeschaltet wird.

Das Erntegut wird dann solange nach rückwärts bewegt, bis der Steuerschalter 25 durch Absenken der Preßklappe 14 in die Grundstellung zurückkehrt, worauf der Antrieb des Kratzboden 5 wieder stillgesetzt wird.

Dieser Vorgang wiederholt sich solange, bis der Laderaum 4 vollständig gefüllt ist.

### Legende :

- 1: Aufnahmevorrichtung
- 2: Fördervorrichtung
- 3: Förderkanal
- 4: Laderaum
- 5: Kratzboden
- 6: Vorderwand des Laderaumes 4
- 7: Seitenwand des Laderaumes 4
- 8: Rückwand des Laderaumes 4
- 9: Boden des Laderaumes 4
- 10: Oberseite des Laderaumes 4
- 11: Abdeckseil der Oberseite 10 des Laderaumes 4
- 12: oberes Ende der Vorderwand 6
- 13: Breite der Vorderwand 6 und der Querträger 29,30
- 14: Preßklappe
- 15: hinteres Ende der Preßklappe 14
- 16: vorderes Ende des Abdeckseiles 11
- 17: Stütze der Preßklappe 14
- 18: stabförmiger Stützteil der Stütze 17
- 19: Lagerteil der Stütze 17
- 20,20': übereinanderliegende Führungen am Lagerteil 19 für den stabförmigen Stützteil 18
- 21: Druckfeder der Stütze 17
- 22: Bolzen-Bohrungsanordnung an der Preßklappe 14
- 23: Bolzen-Bohrungsanordnung an der Seitenwand 7
- 24,24': Abstecker der Stütze 17
- 25: Steuerschalter für den Kratzbodenantrieb
- 26: stumpfer Winkel
- 27: oberer Teil der Vorderwand 6 des Laderaumes 4
- 28: von vorne nach hinten ausgerichtetes Profil der Preßklappe 14
- 29: vorderer Querträger der Preßklappe 14
- 30: hinterer Querträger der Preßklappe 14
- 31: Bügel an dem hinteren Querträger 30 der Preßklappe 14
- 32: Laschen an dem oberen Ende 12 der Vorderwand 6
- 33: Bolzen der Scharniergelenke der Preßklappe 14
- 34: Laschen der Preßklappe 14
- 35: Scharniergelenk
- 36: Länge der Preßklappe 14
- 37: Trägerteil
- 38: Längsträger der Seitenwand 7
- 39: Längsrichtung des Laderaumes 4
- 40,40'40'',40''': Bohrungen im Längsträger 38
- 41: Widerlager
- 42: Verlängerung der Vorderwand 6 des Laderaumes 4
- 43: Druckaufnehmer
- 44: druckübertragendes Teil des Druckaufnehmers 43
- 45: Förderrichtung des Ladegutes
- 46: Schwenkachse des druckübertragenden Teiles 44
- 47: Schaltglied des Druckaufnehmers 43
- 48: elektrischer, hydraulischer oder mechanischer Kratzbodenantrieb
- 49: elektrischer, elektromechanischer, hydraulischer oder elektrohydraulischer Schalter für den Kratzbodenantrieb 48
- 50: Anbringungsstelle für den Druckaufnehmer 43
- 51: Druckplatte
- 52: Betätigungsbügel
- 53: Schaltstößel
- 54: Fahrtrichtung
- 55: Schwenkachse der Verlängerung 42
- 56: Montageplatte
- 57: Feder
- 58: Druckmittel
- 59: Signalleitung

## Patentansprüche

1. Selbstladewagen zum Transportieren von Halm- und Blattgut, bei dem eine Aufnahmevorrichtung das Erntegut vom Boden aufnimmt, und an eine Fördervorrichtung übergibt, die das Erntegut durch einen Förderkanal im wesentlichen nach oben gerichtet in einen Laderaum abgibt, der von einer Vorderwand, zwei Seitenwänden, einer zu öffnenden Rückwand und von einem antreibbaren Kratz- oder Rollboden als Boden gebildet wird wobei der Laderaum teilweise von einer nach oben oder hinten gerichteten Verlängerung der Vorderwand begrenzt sein kann, dadurch gekennzeichnet, daß an der Vorderwand (6) des Laderaumes (4) oder an deren Verlängerung (42) an einer Anbringungsstelle (50) ein Druckaufnehmer (43), zumindest mit einem druckübertragenden Teil (44) in den Laderaum (4) reichend, für die Aufnahme des Druckes des anstehenden Ladegutes fixiert ist.

2. Selbstladewagen nach Anspruch 1, dadurch gekennzeichnet, daß mehrere Anbringungsstellen (50) für die Befestigung des Druckaufnehmers (43) an der Vorderwand (6) des Laderaumes (4) und/oder an deren Verlängerung (42) vorgesehen sind.

3. Selbstladewagen nach Anspruch 1 oder 2, dadurch gekennzeichnet, daß mehrere Druckaufnehmer (43) an mehreren Anbringungsstellen (50) an der Vorderwand (6) des Laderaumes (4) und/oder an deren Verlängerung (42) befestigt sind.

4. Selbstladewagen nach einem der Ansprüche 1 bis 3, dadurch gekennzeichnet, daß der Druckaufnehmer (43) eine Druckplatte (51) oder einen Druckbügel als druckübertragendes Teil (44) aufweist.

5. Selbstladewagen nach Anspruch 1, dadurch gekennzeichnet, daß der Druckaufnehmer (43) aus einer, in Förderrichtung (45) ausgerichteten, aus Profilen (28) aufgebauten Preßklappe (14) besteht.

6. Selbstladewagen nach einem der vorhergehenden Ansprüche, dadurch gekennzeichnet, daß das druckübertragende Teil (44) quer zur Förderrichtung (45) um eine Schwenkachse (46) schwenkbar an dem Druckaufnehmer (43) oder an der Vorderwand (6) des Laderaumes (4) angelenkt ist.

7. Selbstladewagen nach einem der vorhergehenden Ansprüche, dadurch gekennzeichnet, daß das druckübertragende Teil (44) in Förderrichtung (45) des Ladegutes gesehen vorne, zur Fördervorrichtung (2) hin, um eine Schwenkachse (46) schwenkbar angebracht ist.

8. Selbstladewagen nach einem der vorhergehenden Ansprüche, dadurch gekennzeichnet, daß das druckübertragende Teil (44) auf ein Schaltglied (47) wirkt, das unmittelbar oder mittelbar ein mechanisches oder elektrisches oder hydraulisches Schaltsignal für das Einschalten des Kratzbodens (5) abgibt.

9. Selbstladewagen nach einem der vorhergehenden Ansprüche, dadurch gekennzeichnet, daß das Schaltglied (47) ein mechanisches Getriebe verstellt, das den Kratzbodenantrieb (48) einschaltet und nach Beendigung der Ansteuerung durch das druckübertragende Teil (44) wieder ausschaltet.

10. Selbstladewagen nach einem der vorhergehenden Ansprüche, dadurch gekennzeichnet, daß das Schaltglied (47) aus einem elektrischen oder hydraulischen Steuerschalter (25) besteht, der bei Überschreiten eines voreingestellten Druckes des Ladegutes elektrisch oder hydraulisch das Schaltsignal für das Einschalten eines elektrischen, elektromechanischen, hydraulischen oder elektrohydraulischen Schalters (49) abgibt, der den elektrischen, hydraulischen oder mechanischen Kratzbodenantrieb (48) einschaltet und nach Beendigung des Schaltsignals wieder ausschaltet.

11. Selbstladewagen nach dem vorhergehenden Anspruch, dadurch gekennzeichnet, daß der Steuerschalter (25) das Schaltsignal erst nach einer einstellbaren Verzögerungszeit an den Schalter (49) abgibt, oder der Schalter (49) des Kratzbodenantriebes (48) den Kratzboden (5) einschaltet und/oder nach Ausschalten des Steuerschalters (25) das Schaltsignal erst nach einer einstellbaren Verzögerungszeit beendet oder der Schalter (49) nach Beendigung des Schaltsignals erst nach einer einstellbaren Verzögerungszeit den Kratzbodenantrieb (48) abschaltet.

12. Selbstladewagen nach einem der vorhergehenden Ansprüche, dadurch gekennzeichnet, daß der Druckaufnehmer (43) für sehr schweres Ladegut, wie Grünfutter oder Anwelkgut, im unteren Teil, vorzugsweise bis etwa in der halben Höhe der Vorderwand angebracht ist und für leichtes Ladegut wie Rauhfutter oder Stroh im oberen Teil der Vorderwand (6), oder an deren Verlängerung (42) angebracht ist.

13. Selbstladewagen nach einem der vorhergehenden Ansprüche, dadurch gekennzeichnet, daß der Druckaufnehmer (43) abnehmbar ausgeführt und an einer der dafür vorgesehenen Anbringungsstellen (50) angebracht und befestigt werden kann.

14. Selbstladewagen nach einem der vorhergehenden Ansprüche, dadurch gekennzeichnet, daß der Druckaufnehmer (43) aus einem druckübertragenden Teil (44) in Form einer Druckplatte (51) besteht, an der eine Betätigungsbügel (52) angebracht ist, der den Schaltstößel (53) eines elektromechanischen Schalters, der den Steuerschalter (25) bildet, niederdrückt, wenn der Druck des Ladegutes die Druckplatte (51) gegen die Vorderwand (6) drückt.

15. Selbstladewagen nach einem der vorhergehenden Ansprüche, dadurch gekennzeichnet, daß der Druckaufnehmer (43), insbesonders das druckübertragende Teil (44) mit einer Feder (57) als Rückstellmittel versehen ist, das den Steuerschalter (25) und/oder das druckübertragende Teil (44) in einer Grundstellung hält, solange der voreingestellte Schaltdruck nicht erreicht wird.

16. Selbstladewagen nach einem der Ansprüche 1 oder 5, dadurch gekennzeichnet, daß anschließend an das obere Ende (12) der Vorderwand (6) des Laderaumes (4) scharnierend mit dieser verbunden, eine im wesentlichen über die Breite (13) der Vorderwand (6) reichende Preßklappe (14) als Verlängerung (42) angebracht ist, an deren hinterem Ende (15) Abdeckseile (11) für die Oberseite (10) des Laderaumes (4) mit ihren vorderen Enden (16) eingehängt sind und deren Länge (36) in Längsrichtung (39) des Laderaumes (4) im wesentlichen den Bereich des Ladegutes überdeckt, auf den die Druckkraft der Fördervorrichtung (2) einwirkt und sich an ihrem hinteren Ende (15) beiderseits mit je einer Stütze (17) abstützt, die beidseitig an der Preßklappe (14) und an der Seitenwand (7) des Laderaumes (4) angelenkt ist und die einen Steuerschalter (25) des Schaltgliedes (47) schaltet.

17. Selbstladewagen nach Anspruch 16, dadurch gekennzeichnet, daß die Stütze (17) zweiteilig ausgebildet ist, wobei ein stabförmiger Stützteil (18) in Führungen (20,20') eines Lagerteiles (19) gehalten ist, wobei zwischen dem stabförmigen Stützteil (18) und dem Lagerteil (19) eine Druckfeder (21) eingesetzt ist, die beim Hochheben der Preßklappe (14) zusammengedrückt wird.

18. Selbstladewagen nach Anspruch 16 oder 17, dadurch gekennzeichnet, daß die Stütze (17) sowohl an der Preßklappe (14) als auch an der Seitenwand (7) des Laderaumes (4) abnehmbar gelagert ist.

19. Selbstladewagen nach Anspruch 16 oder einem der folgenden Ansprüche, dadurch gekennzeichnet, daß das Lagerteil (19) der Stütze (17) an einem Trägerteil (37) angelenkt ist, der wahlweise in mehreren Stellungen an dem Längsträger (38) der Seitenwand (7) verschraubbar ist.

20. Selbstladewagen nach Anspruch 16 oder einem der folgenden Ansprüche, dadurch gekennzeichnet, daß die Stütze (17) mit beiden freien Enden mit der Preßklappe (14) und dem Trägerteil (37) über je eine Bolzen-Bohrungsanordnung (22,23) angelenkt und mit Absteckern (24,24') gesichert sind.

21. Selbstladewagen nach Anspruch 16 oder einem der folgenden Ansprüche, dadurch gekennzeichnet, daß zwischen dem Stützteil (18) und dem Lagerteil (19) einer der Stützen (17) ein Steuerschalter (25) eingesetzt ist, der bei Hochheben der Preßklappe (14) und Überschreiten einer einstellbaren Grenzlage einen Stromkreis schaltet, mit dessen Hilfe der Antrieb des Kratzbodens (5) eingeschaltet und bei Unterschreiten derselben wieder abgeschaltet wird.

22. Selbstladewagen nach Anspruch 16 oder einem der folgenden Ansprüche, dadurch gekennzeichnet, daß die Preßklappe (14) in ihrer Grundstellung mit der Vorderwand (6) des Laderaumes (4) einen stumpfen Winkel (26), vorzugsweise von etwa 120 Winkelgraden, einschließt.

23. Selbstladewagen nach Anspruch 16 oder einem der folgenden Ansprüche, dadurch gekennzeichnet, daß die Vorderwand (6) des Laderaumes (4) geteilt ausgeführt ist, wobei der obere Teil (27) der Vorderwand (6), an dem die Preßklappe (14) angelenkt ist, nach rückwärts schräg und schwächer geneigt ausgerichtet als die Preßklappe (14) angebracht ist.

24. Selbstladewagen nach Anspruch 16 oder einem der folgenden Ansprüche, dadurch gekennzeichnet, daß die Preßklappe (14) aus, von vorne nach hinten verlaufenden, Profilen (28) aufgebaut ist, die vorne und hinten an einem quer verlaufenden vorderen, als Formrohr ausgebildeten Querträger (29) und einem hinteren, als Formrohr ausgebildeten Querträger (30) verschweißt sind.

25. Selbstladewagen nach Anspruch 16 oder einem der folgenden Ansprüche, dadurch gekennzeichnet, daß die Preßklappe (14) ein Gewicht aufweist, das an den Preßdruck für die Pressung des Ladegutes angepaßt ist.

26. Selbstladewagen nach Anspruch 16 oder einem der folgenden Ansprüche, dadurch gekennzeichnet, daß die Druckfedern (21) der Stützen (17) auf den Preßdruck für die Pressung des Ladegutes abstimmbar eingerichtet sind.

27. Selbstladewagen nach Anspruch 16 oder einem der folgenden Ansprüche, dadurch gekennzeichnet, daß die Abdeckseile (11) mit den vorderen Enden (16) in Bügeln (31) eingehängt sind, die an dem hinteren Querträger (30) der Preßklappe (14) befestigt sind.

## Claims

1. A self-loading wagon for transporting stalk and leaf material, wherin a pick-up device (1) picks up the reaped material from the ground and transfers it to a feed device (2) which conveys the material for loading through a substantially upward directed feed channel (3) into a loading space (4) formed by a front wall (6), two side walls (7), an opening rear wall (8) and a drivable scrapper or roller floor (5) as a floor (9), said loading space (4) may be partially limited of an extension (42) of the front wall (6) which would be directed upwardly and backwardly, caracterised in that a thrust transducer (43) is fix mounted to a mounting spot (50) of the front wall (6) of the loading space (4) or to the extension (42) of the front wall (6) for the reception of thrust exerted by the loading material in vicinity on a thrust transmitting part (44) extending into the loading space (4).

2. A self loading wagon according to claim 1, characterised in that a plurality of mounting spots (50) are provided at the frontwall (6) of the loading space (4) and/or at the extention (42) thereof for fix mounting of the thrust transducer (43).

3. A self loading wagon according to claim 1 or 2, characterised in that a plurality of thrust transducer (43) are fix mounted at a plurality of mounting spots (50) at the front wall (6) of the loading space (4) and/or the extension (42) thereof.

4. A self loading wagon according to any one of the claims 1 to 3, characterised in that the thrust transducer (43) has a thrust plate (51) or a thrust transmitting arc as a thrust transmitting part (44).

5. A self loading wagon according to claim 1, characterised in that the thrust transducer (43) consists of an pressure lap (14) which is aligned in feeding direction (45) and constructed of profile girders (28).

6. A self loading wagon according to any one of the preceding claims, characterised in that thrust transmitting part (44) is articulated with a pivot axle (46) at the thrust transducer (43) in a transverse direction to the feeding direction (45) or of the loading space (4) at the front wall (6).

7. A self loading wagon according to any one of the preceding claims, characterised in that the thrust transmitting part (44) is pivoting with a pivot axle (46) adjusted in feeding direction (45) of the loading material, in front to the feed device (2).

8. A self loading wagon according to any one of the preceding claims, characterised in that the front transmitting part (44) exerts effection upon a switching part (47) which transmits direct or indirect a mechanical or electrical or hydraulical switching signal for switching on the roller floor (5).

9. A self loading wagon according to any one of the preceding claims, characterised in that the transmitting part (47) adjusts a mechanical gear, which ist switching on the roller floor drive (48) and is switching off the roller floor drive (48) after the end of the transmitting period of the thrust transmitting part (44).

10. A self loading wagon according to any one of the preceding claims, characterised in that the switching part (47) consists of an electrical or hydraulical control switch (25) which emits an electrical or hydraulical switching signal when a preadjusted thrust of the loeading material is excerted said switching signal being intended for an electricqal, electromechanical, hydraulical or electrohydraulical switch (49) switching on the electrical, hydraulical or mechanical roller floor drive (48) and switching off after the end of said switching signal.

11. A self loading wagon according to the preceding claims, characterised in that the control switch (25) emits the switching signal for the switch (49) of the roller floor drive (48) after an adjustable retarding time or said switch (49) switches on the roller floor (5) and/or the control switch (25) switches off the switching signal after an adjustable retarding time or said switch (49) switches off the roller floor drive (48) after the end of the switching signal with an adjustable retarding time.

12. A self loading wagon according to any one of the preceding claims, characterised in that the thrust transducer (43) is fitted to the lower part of the front wall (6) preferably in about the half of the upward extension thereof for loading of heavy weight loading material, such as green fodder or fodder for silage and is fitted to the upper part of the front wall (6) or to the extension (42) thereof for loading of light weight loading material, such as hey or straw.

13. A self loading wagon according to any one of the preceding claims, characterised in that the thrust transducer is removable performed and can be fitted to anyone of mounting spots (50) provided therefor.

14. A self loading wagon according to any one of the preceding claims, characterised in that the thrust transducer (43) consists of a thrust transmitting part (44) formed by a thrust plate (51) to which a trigger arc (52) is mounted, pressing down the switch pestle (53) of an electromechanical switch forming a control switch (25) when the loading material exerts thrust against the thrust plate (51) of the front wall (6).

15. A self loading wagon according to any one of the preceding claims, characterised in that the thrust transducer (43) especially the thrust transmitting part (44) is fitted with a spring (57) as a set back mean, keeping the control switch (25) and/or the thrust transmitting part (44) in a basis position as long as the preadjusted thrust is not exceeded.

16. A self loading wagon according to any one of the claims 1 or 5, characterised in that the pressure flap (14) is arranged forming an extension (42) adjoining articulated to the upper end (12) of the front wall (6) and extending substantually over the latitude (13) of the front wall (6) with an extension (36) in longitudinal direction (39) of the loading space, substantially covering an area of the loading material, to which the thrust force of the feed device (2) is exerted and which is fitted at the rear end (15) with supports (17) on both sides of the pressure flap (14) and at said rear end (15) being engaged the front ends (16) of the cover cables (11) of the upper side (10) of the loading space (4) and said before mentioned supports (17) being articulated to the side walls (7) of the loading space (4) and arranged to switch a control switch (25) of the switching part (47).

17. A self loading wagon according to claim 16, characterised in that the support (17) is made of two parts, with a supporting part (18) forming a rod is contained in guidances (20,20') of a bearing part (19) with a compression spring (21) inserted between the rodformed supporting part (18) which spring (21) is compressed with the lifting of the pressure flap (14).

18. A self loading wagon according to claim 16 or 17, characterised in that the support (17) is removable arranged at the pressure flap (14) and at the side wall (7) of the loading space (4).

19. A self loading wagon according to claim 16 or to any one of the following claims, characterised in that the bearing part (19) of the support (17) is articulated to a supporting part (37) which is screwed in anyone of a plurality of positions to the longitudinal girder (38) of the side wall (7).

20. A self loading wagon according to claim 16 or to any one of the preceding claims, characterised in that the support (17) is articulated with both free end to the pressure flap (14) and the supporting part (37) with the means of a bolt-bore-hole-arrangement (22,23) and secured by pins (24,24')

21. A self loading wagon according to claim 16 or to any one of the preceding claims, characterised in that a control switch (25) is inserted between the support part (18) and the bearing part (19) of anyone of the supports (17), said control switch (25) switches on an electrical circuit by which means the drive of the roller floor (5) when the pressure flap (14) is lifted beyond a limiting position and switches off said electrical circuit whne ist is lowered beneath said position.

22. A self loading wagon according to claim 16 or to anyone of the preceding claims, characterised in that the pressure flap (14) includes in the basis position an obtuse angle (26) of preferably 120 degrees with the front wall (6) of the loading space (4).

23. A self loading wagon according to claim 16 or to any one of the preceding claims, characterised in that the front wall (6) of the loading space (4) is divided and the upper part (27) of the front wall (6) to which teh pressure flap (14) is articulated is arranged in backward directions inclined with a fainter inclination than the pressure flap (14) itself.

24. A self loading wagon according to claim 16 or to anyone of the preceding claims, characterised in that the pressure flap (14) is built of profile girders (28) which are arranged from the front to the back and which are welded to a front cross-bar (29) situated in front and to a back cross-bar (30) situated in the back of the flap (14) said cross-bars being formed as formed tubes.

25. A self loading wagon according to claim 16 or to any one of the preceding claims, characterised in that the pressure flap (14) has a weight which is adapted to the thrust for the pressing of the loading material.

26. A self loading wagon according to claim 16 or to any one of the preceding claims, characterised in that the compression springs (21) of the supports (17) are mounted adjustable to the thrust of the pressing of the loading material.

27. A self loading wagon according to claim 16 or to any one of the preceding claims, characterised in that the cover cables (11) are hinged with the front ends (16) to arcs (31) which are fastened to the back cross-bar (30) of the pressure flap (14).

## Revendications

1. Vehicule autochargeur destiné au transport de produits en tige et en feuille, dans lequel un dispositif de réception (1) reçoit le produit de la récolte depuis le sol et le transfère à un dispositif de manutention (2) qui décharge le produit chargé par un canal de manutention (3) pour essentiel étant dirigé vers le haut dans une chambre de chargement (4) qui est constituée par une parois avant (6) deux parois letérales (7), une parois arrière à ouvrir et par un planche à racloir ou à rouleau (5) et ou la chambre de chargement (4) peut être limitée par un allongement (42) de la parois avant (6) pointé vers le haut ou vers l'arrière, charactérisé en ce que à un endroit de l'application (50) de la parois avant (6) de la chambre de chargement (4) ou d'allongement (42) de celle un ameneur de pression (43) est fixé, contenant au moins un partie de transmission de pression (44) s'entendant dans la chambre de chargement (4) pour amenée le pression du produit de chargement.

2. Véhicule autochargeur selon la revendication 1, characterisé en ce que plusieurs endroits de l'ápplication (50) sont prevus pour le fixations d'amemeur de pression (43) à la parois avant (6) de la chambre de chargement (4) et/ou à l'allongement (42) de la parois avant (6).

3. Véhicule autochargeur selon la revendication 1 ou 2, charcterisé en ce que plusieurs ameneurs de pression (43) sont fixé à plusieurs endroits de l'application (50) à la parois avant (6) de la chambre de chargement(4) et/ou à l'allongement (42) de la parois avant (6).

4. Véhicule autochargeur selon l'une des revendications 1 à 3, characterisé en ce que l'ameneur de pression (43) contient une plaque de pression (51) ou un ètrier de pression comme une partie de transmission de pression (44).

5. Vehicule autochargeur selon l'une des revendications 1, characterisé en ce que l'aamineur de pression (43) se compose d'un clapet de pression (14) aligné dans le direction de manutention (45) et construit de matérial profilé (28).

6. Véhicule autochargeur selon l'une des revendications précédentes, characterisé en ce que la partie de transmission de pression (44) est articulée pivotante sur un axe de pivotage (46) à transvers de la direction de manutention (45).

7. Véhicule autochargeur selon l'une des revendications précédentes, characterisé en ce que la partie de transmission de pression (44) est articulée sur une axe de pivotage (46) situé en avant dans la direction du dispositif de manutention (2) vue à la direction de manutention (45) du produit de chargement.

8. Véhicule autochargeur selon l'une des revendications précédentes, characterisé en ce que la partie de transmission de pression (44) est exercante un effet sur une partie commutative (47), qui transmit un signale commutative méchanique ou électrique ou hydraulique pour l'embrayage directe ou indirecte du plancher à rouleau (5).

9. Véhicule autochargeur selon l'une des revendications précédentes, characterisé en ce que la partie commutative(47) régle un engrenage mécanique, qui met en marche l'entraînement (48) du plancher à racloir (2) et arrête celui aprés le fin de mettre en service par la partie de transmission de pression (44).

10. Vehicule autochargeur selon l'une des revendications précédentes, characterisé en ce que la partie commutative(47) se compose d'un commutateur de réglage (25) électrique ou hydraulique, qui émet une signale commutative électrique ou hydraulique pour mettre en service un commutateur électrique, électro-mechanique, hydraulique ou electro-hydraulique (49) quand une pression préajustable est dépassée de produit de chargement, ce commutateur (49) met en marche la entraînement électrique, hydraulique ou mécanique (48) de plancher à racloir (2) et arrête celui aprés de finir la signale commutative.

11. Vehicule autochargeur selon l'une des revendications précédentes, characterisé en ce que la commutateur de réglage (25) émet la signale commutative aprés un intervalle de temps de retardement ajustable au commutateur (49) ou au commutateur (49) du entraînement (48) qui met en marche le plancher à racloir (2) et/ou finit la signale commutative aprés un intervalle de temps de retardement ajustable à la suite de l'interruption du commutateur de réglage (25) ou le commutateur (49) interrompre l'entraînement (48) du plancher à racloir (2) aprés de finir la signale commutative à la suite de finir un intervalle de temps de retardement ajustable.

12. Vehicule autochargeur selon l'une des revendications précédentes, characterisé en ce que le ameneur de pression (43) pour le produit de chargement lourd, comme du fourrage vert ou du fourrage vert dishydraté partiellement est appliqué a la partie au-dessous, préférablement jus'que au mi-niveau, de la parois avant (6) et pour du fourrage leger comme du fourrage grossier ou de la paille il est appliqué à la partie au-dessus de la parois avant (6) ou à l'extention (42) de celle.

13. Vehicule autochargeur selon l'une des revendications précédentes, characterisé en ce que l'ameneur de pression (43) est appliqué démontable à un endroit d'application (50) prévue et est fixé là.

14. Vehicule autochargeur selon l'une des revendications précédentes, characterisé en ce que l'ameneur de pression (43) est formé d'une partie de transmission de pression (44) d'une forme d'une plaque de pression (51) à quelle un étrier de commande (52) est attaché, qui déprime le poussoir commutatif (53) d'un commutateur électromécanique, qui fait le commutateur de réglage (25) en ce cas où la pression du produit de chargement presse la plaque de pression (51) contre la parois avant (6).

15. Vehicule autochargeur selon l'une des revendications précédentes, characterisé en ce que l'ameneur de pression (43) spécialement la partie de transmission (44) est équipé avec un ressort (57) s'effectué comme d'un moyen de rappel, qui retient le commutateur de réglage (25) dans une positon initiale, aussi longtemps que la pression commutative préajustée n'est attaîndrait pas.

16. Vehicule autochargeur selon l'une de revendications 1 ou 5, characterisé en ce que un clapet de pression (14) est appliqué suivant au bout superieur (12) de la parois avant (6) de la chambre de chargement (4) et reliée articulante somme un allongement (42) au bout derriére de ce clapet de pression (14) des câbles decouvrants (11) sont suspendus à leurs bouts avant (16) formant la parois supérieure (10) de la chambre de chargement (4) en couvrant la longieur (36) de celle en direction longitudinale (39) de la chambre de chargement (4) de l'essentiel sur la zone du produit de chargement, ce clapet de pression (14) s'étant sontenu sous la force de pression du dispositif de manutention (2) à son bout arriére (15) aux deux côtes du clapet de pression (14) et aux parois laterales (7) de la chambre de chargement (4) du partie commutative.

17. Vehicule autochargeur selon la revendication 16, chracterisé en ce que l'appui (17) et formé de deux parties ou une partie portante d'une partie de tige est gardée entre guides (20.20') d'une partie de palier (19), entre ce deux parties (18,19) étant placé un ressort de pression (21), qui est comprimé quand le clapet de compression (14) est soulevé.

18. Vehicule autochargeur selon la revendication 16 ou 17, chrakterisé en ce que l'appui (17) est soutenu démontable au clapet de pression (14) et à la parois laterale (6) de la chambre de pression (4).

19. Vehicule autochargeur selon la revendication 16 ou selon l'une des revendications suivantes, characterisé en ce que la partie de palier (19) de lappui (17) est articulée à une partie portante (37) qui peut coulonnée au support longitudinal (38) de la parois laterale (7) dans une de plusieurs positions.

20. Vehicule autochargeur selon la revendication 16 ou selon l'une des revendications suivantes, characterisé en ce que l'appui (17) est articulé au clapet de pression (14) et à la partie portante (37) par un arrangement de boulon et de perçage (22,23) respectif qui sont bloquée par des boulons de fixation (24,24').

21. Vehicule autochargeur selon la revendication 16 ou selon l'une des revendications suivantes, characterisé en ce que un commutateur de réglage (25) est inserté entre la partie portante (18) et la partie de palier (19) d'un des appuis (17), ce ommutateur de réglage (25) couple un circuit électrique en souslevant le clapet de compression (24) et en dépassant une position limitative et ce-qui met en marche l'entraînement du plancher à racloir (4) et le désaccouple en dépassant vers le bas celle-là.

22. Vehicule autochargeur selon la revendication 16 ou selon l'une des revendications suivantes, characterisé en ce que le clapet de pression (14) s'enferme dans sa position initiale avec la parois avant (6) de la chambre de chargement (4) un angle obtus (26) en préferense de 120 degrés environ.

23. Vehicule autochargeur selon la revendication 16 ou selon l'une des revendications suivantes, characterisé en ce que la parois avant (6) de la chambre de chargement (4) est divisée, la partie superieure (27) de la parois avant (6) où le clapet de pression (14) est articulé s'inclinant au derrieré d'une mesure plus faible que le clapet de pression (14).

24. Vehicule autochargeur selon la revendication 16 ou selon l'une des revendications suivantes, characterisé en ce que le clapet de pression (14) consiste de parties profiles (28) d'étendant de avant à derriére et qui sont soudées avant et arriére à une traverse arriére (29) et à une traverse avant (30) qui sont formées des tuyaux formants.

25. Vehicule autochargeur selon la revendication 16 ou selon l'une des revendications suivantes, characterisé en ce que le clapet de pression (14) a un poids adapté à la pression pour la compression du produit de chargement.

26. Vehicule autochargeur selon la revendication 16 ou selon l'une des revendications suivantes, characterisé en ce que le ressorts de compression (21) des appuis (17) sont adaptés à la pression pour la compression du produit de chargement.

27. Vehicule autochargeur selon la revendication 16 ou selon l'une des revendications suivantes, characterisé en ce que les câbles decouvrants (11) sont suspendus aux bouts avant (16) en étriers (31) qui sont fixés à la traverse arriére (29) du clapet de pression (14).
